# EUROPÄISCHE PATENTSCHRIFT

(11) **EP 4 353 665 B1**
(45) Veröffentlichungstag und Bekanntmachung des Hinweises auf die Patenterteilung: **02.04.2025**
(21) Anmeldenummer: 23202151.9
(22) Anmeldetag: 06.10.2023
(51) Int. Cl.: B66C 1/66, F16B 45/00

(54) **ANSCHLAGPUNKT**
STOP POINT
POINT DE BUTÉE

(30) Priorität: 12.10.2022 DE 202022105774 U
(43) Veröffentlichungstag der Anmeldung: 17.04.2024
(73) Patentinhaber: J.D. Theile GmbH & Co. KG, 58239 Schwerte (DE)
(72) Erfinder: Wirtz, Jörg, 58239 Schwerte (DE); Sokolla, Jörg, 58239 Schwerte (DE); Haverkamp, Martin, 58644 Iserlohn (DE)
(74) Vertreter: Haverkamp Patentanwälte PartG mbB

(56) Entgegenhaltungen:
- EP-A1- 3 279 505
- DE-U1- 202019 002 873

## Beschreibung

Die Erfindung betrifft einen Anschlagpunkt mit einem einen Gewindebolzen als Anschlussmittel zum Anschließen des Anschlagpunktes an einen damit handzuhabenden Gegenstand aufweisenden Unterteil und mit einem gegenüber dem Unterteil drehbaren und daran angeschlossenen Oberteil mit den weiteren Merkmalen des Oberbegriffs des Anspruchs 1.

Derartige Anschlagpunkte, seien sie als Ringschraube oder Anschlagwirbel ausgebildet, werden typischerweise zum Heben oder Verzurren von Gegenständen verwendet. Angeschlossen werden die Anschlagpunkte mit ihrem Unterteil an dem zu handhabenden Gegenstand, wobei typischerweise zum Handhaben eines solchen Gegenstandes mehrere Anschlagpunkte zum Einhängen eines entsprechenden Hebegeschirres verwendet werden. Als Anschlussmittel verfügen vor allem solche Anschlagpunkte, die nicht dauerhaft an einem handzuhabenden Gegenstand befestigt sein sollen, über einen Gewindebolzen als Teil des Unterteils, mit dem der Anschlagpunkt, in eine hierzu komplementäre Innengewindebohrung des handzuhabenden Gegenstandes eingeschraubt, mit diesem Gegenstand verspannt wird. Als Anschlussorgan des Oberteils zum Anschließen eines Hebe-, Anschlag- oder Zurrmittels kann je nach der gewünschten Verwendung eine Öse oder ein Gabelkopf vorgesehen sein. In beiden Fällen kann das Anschlussorgan so ausgestaltet sein, dass ein Hebe-, Anschlag- oder Zurrmittel unmittelbar daran angeschlossen werden kann oder dass in ein solches Anschlussorgan eine Hakenöse eingesetzt ist, an der dann das Hebe-, Anschlag- oder Zurrmittel angeschlossen wird.

Das Oberteil eines solchen Anschlagpunktes ist gegenüber dem Unterteil drehbar, damit sich bei Anliegen einer auf das Anschlussorgan des Oberteils wirkenden Zugkraft dieses und damit das Oberteil in Zugrichtung ausrichten kann. Die Drehbeweglichkeit des Oberteils gegenüber dem Unterteil kann auf unterschiedliche Weise realisiert sein.

Zum Anschließen eines solchen Anschlagpunktes an einen damit handzuhabenden Gegenstand trägt die Oberseite des Unterteils typischer Weise eine Drehmitnahmekontur. Diese kann als Außenkontur oder auch als Innenkontur ausgebildet sein. Diese dient dem Zweck, dass der Anschlagpunkt mit einem entsprechenden Werkzeug mit dem handzuhabenden Gegenstand verspannt werden kann. In vielen Fällen, vor allem in solchen, in denen ein solcher Anschlagpunkt nicht dauerhaft an einem handzuhabenden Gegenstand verbleit, werden derartige Anschlagpunkte auch ohne ein zusätzliches Werkzeug an dem handzuhabenden Gegenstand angeschlossen und mit diesem verspannt. Genutzt wird hierzu das gegenüber dem Unterteil drehbare Oberteil mit seinem Anschlussorgan, welches dann als Betätigungshandhabe genutzt wird. Bei derartigen Anschlagpunkten wird zum Zwecke einer Drehmomentübertragung von dem Oberteil in das Unterteil die Drehbeweglichkeit zwischen diesen beiden Teilen des Anschlagpunktes aufgehoben, sodass für diese Zwecke das Oberteil drehmomentschlüssig mit dem Unterteil gekoppelt ist. Aus EP 3 736 459 B1 ist ein solcher Anschlagpunkt bekannt. Bei diesem Anschlagpunkt ist das Oberteil gegenüber dem Unterteil gegen die Kraft eines Rückstellelementes in axialer Richtung verstellbar. Das Unterteil weist als Drehmitnahmekontur einen üblichen Sechskantkopf auf. Um das Oberteil drehmomentschlüssig mit dem Unterteil in Eingriff stellen zu können, sind an den das Anschlussorgan dieses Anschlagpunktes bildenden Ösenbogen in Richtung zur Innenseite vorspringenden Drehmitnahmenocken angeformt. Der Abstand der zueinander weisenden Flächen dieser Drehmitnahmenocken entspricht dem Abstand zweier einander gegenüberliegender Drehmitnahmeflächen der Drehmitnahmekontur des Unterteils. In einer Stellung des Oberteils gegenüber dem Unterteil, in der in axialer Richtung die Drehmitnahmeflächen der Drehmitnahmenocken mit denjenigen der Drehmitnahmekontur des Unterteils fluchten, können die beiden komplementären Drehmitnahmekonturen durch eine axiale Bewegung des Oberteils gegenüber dem Unterteil in Eingriff gestellt werden. Dann kann der Anschlagpunkt ohne weiteres mit dem handzuhabenden Gegenstand durch entsprechendes Drehen des Oberteils verspannt werden. Da diese Kopplungsbewegung des Oberteils gegen die Kraft eines Rückstellelementes erfolgt, wird das Oberteil, wenn benutzerseitig losgelassen, wieder in seine gegenüber dem Unterteil frei drehbare Position gebracht.

Dieses vorbekannte Konzept einer Drehmitnahmekopplung des Oberteils mit dem Unterteil lässt sich nicht auf Anschlagpunkte übertragen, bei denen das Oberteil und das Unterteil durch Wälzlagerkörper miteinander verbunden sind. Durch die Wälzlagerkörper ist eine axiale Verstellbarkeit zwischen Oberteil und Unterteil blockiert. Um dennoch bei einem solchen Anschlagpunkt eine drehmomentschlüssige Kopplung zwischen Oberteil und Unterteil herbeizuführen, ist in EP 3 494 079 B1 vorgeschlagen worden, einen Sperrbolzen vorzusehen. Dieser erstreckt sich durch den gesamten Grundkörper des drehbaren Oberteils. Dieser Sperrbolzen kann um 180 Grad verschwenkt werden, wobei die Drehachse des Sperrbolzens quer zur Drehachse des Oberteils gegenüber dem Unterteil verläuft. In dem mittleren Abschnitt des Sperrbolzens ist eine Ausnehmung eingebracht. Die Tiefe der Ausnehmung erstreckt sich in den beiden Schwenkendstellungen des Sperrbolzens in axialer Richtung. Das Unterteil verfügt über eine schlitzförmige oberseitige Ausnehmung, in die der Sperrbolzen in einer seiner Endstellungen eingreift. Dies ist dann der Fall, wenn eine Drehmitnahmekopplung zwischen Oberteil und Unterteil gewünscht wird. In seiner anderen Stellung greift der Sperrbolzen nicht in die als Schlitz ausgeführte Drehmitnahmekontur des Unterteils ein, weshalb in dieser Stellung das Oberteil gegenüber dem Unterteil frei drehbar ist. Bei diesem Anschlagpunkt werden durch die erforderliche Verstellbarkeit des Sperrbolzens mit seinem Stellhebel außenseitig Überstände erzeugt. Überdies ist der aus diesem Grunde notwendiger Weise flach gehaltene Stellhebel mitunter nicht immer problemlos zu ergreifen, vor allem wenn Handschuhe getragen werden. Ferner muss das Oberteil mit seinem Sperrbolzen in axialer Richtung mit der axialen Erstreckung des Drehmitnahmeschlitzes des Unterteils fluchten, um die drehmomentschlüssige Kopplung herbeiführen zu können. Mitunter ist das Finden dieser Positionierung von Oberteil zu Unterteil nicht einfach. Zudem wäre es aus handhabungstechnischen Sicherheitserwägungen wünschenswert, wenn eine Entkopplung der Drehmitnahme von Oberteil und Unterteil, wie beim Gegenstand der EP 3 736 459 B1 möglich wäre.

Auch bei DE 20 2019 002 873 U1, die einen Anschlagpunkt gemäß dem Oberbegriff des Anspruchs 1 offenbart, ist eine Entkopplung der Drehmitnahme von Oberteil und Unterteil wie beim Gegenstand der EP 3 736 459 B1 nicht möglich. Bei diesem vorbekannten Anschlagpunkt wird ein Kupplungsbolzen mittels eines Griffes in seiner Freigabestellung gehalten. Der Kupplungsbolzen ist federbelastet. Ist der Griff und damit der Kupplungsbolzen freigegeben, entspannt sich die Feder und drückt den Kupplungsbolzen bei entsprechender Stellung des Unterteils gegenüber dem Oberteil in eine darin in radialer Richtung eingebrachte Sackbohrung.

Ausgehend von diesem diskutierten Stand der Technik liegt der Erfindung die Aufgabe zugrunde, einen Anschlagpunkt der eingangs genannten Art dergestalt weiterzubilden, dass den vorstehend genannten Anforderungen genüge getan wird.

Gelöst wird diese Aufgabe erfindungsgemäß durch einen eingangs genannten, gattungsgemäßen Anschlagpunkt mit den Merkmalen des Anspruchs 1.

Bei diesem Anschlagpunkt ist als Kupplungsmittel ein in radialer Richtung verstellbarer Kupplungsbolzen vorgesehen. Unabhängig von der konkreten Auslegung des Anschlagpunktes, und zwar dahingehend, ob das Oberteil mit einem Abschnitt das Unterteil einfasst oder umgekehrt, ist der Kupplungsbolzen in dem außenliegenden Teil - dem Außenlagerteil - gehalten. Das andere Teil des Anschlagpunktes - das Innenlagerteil - verfügt komplementär zu dem in radialer Richtung verstellbaren Kupplungsbolzen mit seinem endseitigen Kupplungsabschnitt über wenigstens eine in radialer Richtung nach außen offene Drehmitnahmekontur. Diese ist typischer Weise als Ausnehmung ausgeführt, kann grundsätzlich jedoch auch in Form eines Drehmitnahmenockens und somit als abragende Kontur konzipiert sein. Der Kupplungsbolzen selbst ist in radialer Richtung zum Koppeln des Oberteils gegenüber dem Unterteil gegen die Kraft wenigstens eines Rückstellelementes manuell verstellbar. Dadurch ist gewährleistet, dass wenn der Kupplungsbolzen nicht mehr betätigt ist, dieser sich in seiner Stellung befindet, in der das Oberteil frei gegenüber dem Unterteil drehbar ist. Die radiale Verstellbarkeit des Kupplungsbolzens erleichtert, vor allem wenn die komplementäre Drehmitnahmekontur des Innenlagerteils als Drehmitnahmeausnehmung ausgeführt ist, eine Selbstfindung der Eingriffsstellung des Kupplungsabschnittes Kupplungsbolzens in eine solche Drehmitnahmekontur, die dann quasi von selbst erfolgt. Um dieses zu erreichen, wird der Kupplungsbolzen manuell eingedrückt, bis sein Kupplungsabschnitt die äußere Mantelfläche des Innenlagerteils kontaktiert. Wird dann das Oberteil gegenüber dem Unterteil gedreht, springt durch die manuelle auf den Kupplungsbolzen wirkende Kraft sein Kupplungsabschnitt selbsttätig in eine Drehmitnahmeausnehmung ein, wenn beide Teile entsprechend zueinander positioniert sind.

Von besonderem Vorteil eines solchen Kupplungsmittels ist auch, dass ein damit ausgerüsteter Anschlagpunkt durchaus auch mehrere, unabhängig von einer betätigbare, Kupplungsmittel dieser Art aufweisen kann, beispielsweise an zwei aneinander bezüglich der Drehachse des Oberteils gegenüberliegenden Positionen. Zum Verspannen des Anschlagpunktes mit einem handzuhabenden Gegenstand ist es völlig ausreichend, wenn die Kopplung mit einem einzigen solchen Kupplungsmittel bereitgestellt ist. Schließlich sind für ein handfestes Verspannen zwischen einem solchen Anschlagpunkt und einem handzuhabenden Gegenstand nur Kräfte von etwa 20 Nm aufzubringen.

Vorteilhaft ist bei diesem Anschlagpunkt ferner, dass dieses Kopplungskonzept für Anschlagpunkte unterschiedlichster Ausgestaltung angewendet werden kann, insbesondere auch auf Anschlagpunkte, bei denen die Lagerung von Oberteil und Unterteil durch Einschaltung von Wälzlagerkörpern erfolgt. Vorteilhaft ist ferner der für eine Realisierung eines solchen Kupplungsmittels geringe herstellungstechnische Aufwand.

Von Vorteil ist ferner, dass der Kupplungsbolzen mit seinem Kupplungsabschnitt mit der in radialer Richtung nach außen weisenden Mantelfläche des Innenlagerteils in Eingriff gestellt wird. Aus diesem Grunde kann das Innenlagerteil, wenn dieses das Unterteil ist, durchaus an seiner Oberseite eine für einen Werkzeugangriff geeignete Drehmitnahmekontur aufweisen. Diese wird dann verwendet, wenn der Anschlagpunkt mit höheren Kräften mit einem handzuhabenden Gegenstand verspannt werden soll, was bei einem dauerhaften Anschluss eines solchen Anschlagpunktes an einen handzuhabenden Gegenstand vorgesehen ist. Dann kann der Anschluss beispielsweise mit einem Drehmomentschlüssel vorgenommen werden um die Verspannung mit der vorgegebenen Vorspannkraft herbeizuführen. Für die Führung des Kupplungsbolzens ist in einem Ausführungsbeispiel vorgesehen, hierfür eine das Außenlagerteil in einem Abschnitt durchgreifende Führungsbohrung vorzusehen. Das Vorsehen einer solchen Führungsbohrung kann in Umfangsrichtung des Außenlagerteils an beliebiger Stelle vorgesehen sein. Zum Halten des Kupplungsbolzens in seiner Ausgangstellung, in der das Oberteil gegenüber dem Unterteil frei drehbar ist, ist gemäß einer bevorzugten Ausführungsform vorgesehen, dass der Kupplungsbolzen eine von seinem Kupplungsabschnitt wegweisende Anschlagfläche aufweist. Bereitgestellt werden kann diese durch eine stufenartig ausgeführte Durchmesserreduzierung des Kupplungsbolzens. In Richtung zu dem Kupplungsabschnitt kann der Durchmesser des Kupplungsbolzens gleichbleibend oder ebenfalls wieder stufig reduziert sein, wenn der Kupplungsabschnitt einen geringeren Durchmesser aufweisen soll als die Anschlagfläche. Diese Anschlagfläche des Kupplungsbolzens wirkt zusammen mit einem Gegenanschlag des Außenlagerteils. In dieser Stellung ist der Kupplungsbolzen, mit seiner Anschlagfläche gegen den Gegenanschlag des Außenlagerteils unter Vorspannung wirkend, durch das zumindest eine Rückstellelement gehalten. Der Gegenanschlag kann Teil der Führungsbohrung sein. Ebenfalls ist es möglich, dass der Gegenanschlag durch einen zum Innenlagerteil weisenden Wandabschnitt des Außenlagerteils bereitgestellt ist, durch den die Innenseitige Mündung der Führungsbohrung eingefasst ist.

Vorzugsweise ist die Führungsbohrung gestuft ausgeführt und umfasst einen radial innenliegenden Abschnitt mit einem geringeren Durchmesser. Dieser dient zur Führung des in radialer Richtung verstellbaren Kupplungsbolzens. Daher sind der Durchmesser dieses Abschnittes der Führungsbohrung und der Durchmesser des darin geführten Abschnittes des Kupplungsbolzens entsprechend aufeinander abgestimmt. Ein radial hieran angrenzender außenliegender Abschnitt weist einen größeren Durchmesser auf. Hierdurch ist ein den Kupplungsbolzen in diesem Abschnitt umgebender Ringspalt geschaffen. In diesem ist typischer Weise das zumindest eine Rückstellelement, ausgeführt beispielsweise als Schraubendruckfeder, angeordnet. Der Kupplungsbolzen verfügt gemäß einer bevorzugten Ausgestaltung an seinem Betätigungsende über eine Betätigungshandhabe. Diese dient zur erleichterten Bedienbarkeit des Kupplungsbolzens, beispielsweise da durch diese der Durchmesser des Kupplungsbolzens vergrößert ist und somit eine ergonomisch günstigere Betätigungsfläche aufweist. Gemäß einer Ausgestaltung ist als Betätigungshandhabe eine auf das diesseitige Ende des Kupplungsbolzens aufgesteckte Betätigungskappe vorgesehen. Die radial nach innen weisende Stirnfläche einer solchen Betätigungskappe dient vorzugsweise als Abstützfläche für das zumindest eine, beispielsweise als Schraubendruckfeder ausgeführte Rückstellelement, welches sodann einerseits an der Stirnfläche der Betätigungskappe und anderseits an dem in der Führungsbohrung befindlichen Absatz abgestützt ist. Eine solche Betätigungskappe ist kraftschlüssig in axialer Richtung mit dem Kupplungsbolzen verbunden, beispielsweise durch eine Klebeverbindung. Die Führungsbohrung geht, einem bevorzugten Ausführungsbeispiel folgend, in eine Griffmulde über. In dieser befindet sich die Betätigungshandhabe, die sodann in radialer Richtung außenseitig nicht über die Mantelfläche des Außenlagerteils vorsteht. Der Außendurchmesser der Griffmulde und deren Tiefe ist ausgelegt, damit benutzerseitig ein Eindrücken des Kupplungsbolzens mit einem Finger, beispielsweise dem Daumen möglich ist.

Ein solcher Anschlagpunkt verfügt vorzugsweise über mehrere, mit gleichem Winkelabstand zueinander angeordnete Drehmitnahmekonturen, beispielsweise Drehmitnahmeausnehmungen. Dann kann eine drehmomentschlüssige Kopplung zwischen dem Oberteil und dem Unterteil in unterschiedlichen Drehstellungen dieser beiden Teile zueinander herbeigeführt werden. Auch wenn mit den vorbeschriebenen Kupplungsmitteln eine Selbstfindung möglich ist, ist in einem Ausführungsbeispiel vorgesehen, dass das Lagerinnenteil zum Kennzeichnen der einen oder der mehreren Positionen jeweils einer Drehmitnahmekontur entsprechende Markierungen trägt. Diese Markierungen können auf einem ein Spalt zwischen dem Lagerinnenteil und dem Außenlagerteil verschließenden Verschlussring sein.

Bei einer Ausgestaltung des Anschlagpunktes mit einer Öse als Anschlussorgan wird es als vorteilhaft angesehen, wenn die Längserstreckung des Kupplungsbolzens quer zur Ösenebene angeordnet ist. In einem solchen Fall werden immer typischer Weise zwei einander diametral gegenüberliegende Kupplungsmittel dieser Art an dem Außenlagerteil vorgesehen. Dies ist insbesondere bei einer Ausgestaltung des Anschlagpunktes aus ergonomischen Gründen sinnvoll, wenn das Außenlagerteil das Oberteil des Anschlagpunktes ist.

Nachfolgend ist die Erfindung anhand eines Ausführungsbeispiels unter Bezugnahme auf die beigefügten Figuren beschrieben. Es zeigen:
- **Fig.1:**: Ein Anschlagpunkt gemäß der Erfindung, dargestellt nach Art einer Explosionsdarstellung,
- **Fig. 2:**: der Anschlagpunkt der Figur 1 in seinem Zusammenbau,
- **Fig. 3:**: ein Längsschnitt durch den Anschlagpunkt der Figur 2 mit vergrößerten Detaildarstellungen und
- **Fig. 4:**: der Anschlagpunkt der vorstehenden Figuren bei dem Vorgang des Anschließens desselben an einen schematisiert dargestellten, handzuhabenden Gegenstand.

Ein Anschlagpunkt 1 umfasst ein Oberteil 2 und ein Unterteil 3. Das Oberteil 2 verfügt als Anschlussorgan zum Anschließen eines Hebe-, Anschlag- oder Zurrmittels über einen Ösenbogen 4. Der Ösenbogen 4 ist angeformt an einen ringförmig ausgelegten Grundkörper 5. Der ringförmige Grundkörper 5 fasst eine als Durchbrechung aufgebaute Unterteilaufnahme 6 ein. Die die Innenseite des Grundkörpers 5 bildende und die Unterteilaufnahme 6 einfassende Wand umfasst einen oberen zylindrischen Wandabschnitt 7 und eine daran anschließende Lagerfläche 8. Die Lagerfläche 8 ist in Richtung von dem Ösenbogen 4 wegweisend konisch verjüngt. Die konische Verjüngung verläuft bei dem dargestellten Ausführungsbeispiel gerade.

Das Unterteil 3 verfügt über einen Kopfabschnitt 9, einen Schaftabschnitt 10 und über einen Gewindebolzen 11. Der Gewindebolzen 11 stellt bei dem Anschlagpunkt 1 sein Anschlussmittel zum Anschließen des Anschlagpunktes 1 an einen handzuhabenden Gegenstand dar.

Der Kopfabschnitt 9 verfügt unterseitig und somit in Richtung zu seinem Gewindebolzen 11 weisend über eine Lagerfläche 12. Diese ist mit demselben Winkel und in derselben Richtung verjüngt wie die Lagerfläche 8 des Oberteils 2. Die Lagerfläche 12 wird durch einen Mantelflächenabschnitt des gegenüber dem Schaftabschnitt 10 in radialer Richtung ausragenden Kopfabschnittes 9 bereitgestellt. In die obere Stirnseite 13 des prinzipiell als Schraubbolzen konzipierten Unterteils 3 ist eine als Sechskant ausgeführte Drehmitnahmekontur 14 eingebracht. In die in radialer Richtung weisende Außenseite 15 des Kopfabschnittes 9 sind mehrere mit gleichem Winkelabstand zueinander angeordnete Drehmitnahmeausnehmungen 16 eingebracht. Diese sind als in axialer Richtung endseitig offenen Nuten ausgeführt. Der Schaftabschnitt 10 trägt einen umlaufenden Verriegelungswulst 17.

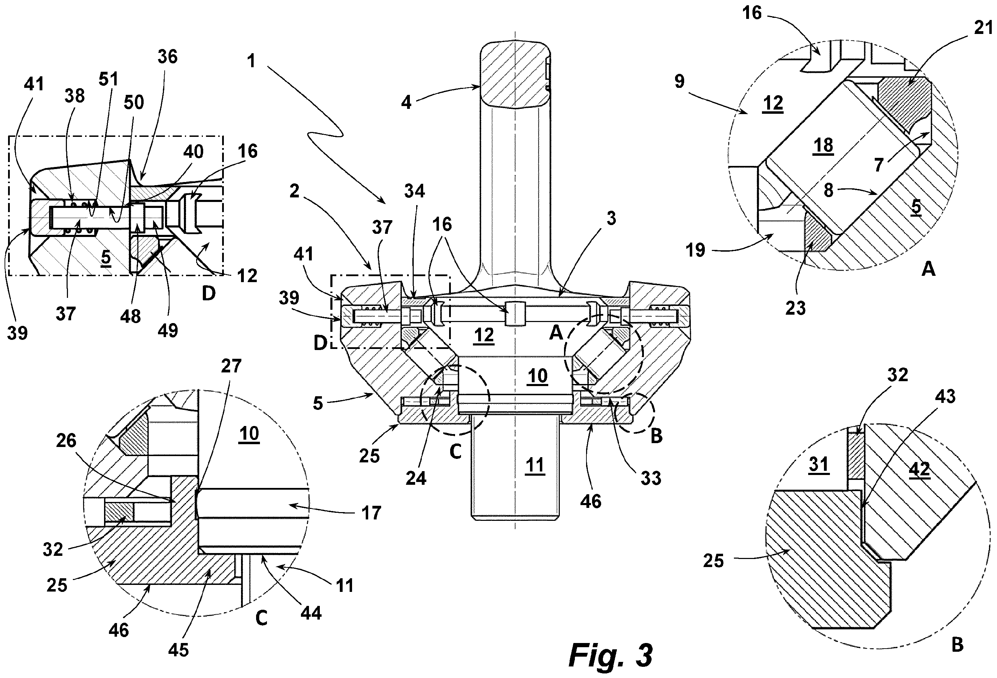

Zur Lagerung der Drehbeweglichkeit des Oberteils 2 gegenüber dem Unterteil 3 dienen zylindrische Wälzlagerkörper 18, die in einem Lagerkörperkäfig 19 angeordnet und geführt sind. Zu diesem Zweck verfügt der Lagerkörperkäfig 19 über eine der Anzahl der Wälzlagerkörper 18 entsprechende Anzahl an Wälzkörperaufnahmen 20. Der Lagerkörperkäfig 19 verfügt oberseitig über einen Positionierungsring 21, dessen radiale Außenseite 22 an dem Wandabschnitt 7 des Oberteils 2 abgestützt ist. Ein unterer Positionierungsring 23 ist bezüglich seiner Außenkontur geformt, um in den Übergang der Lagerfläche 8 in einen radialer Richtung nach innen gerichteten Vorsprung 24 (siehe Figur 3) einzugreifen.

Teil des Unterteils 3 ist ein nach Art einer Scheibe ausgeführter Verschlusskörper 25, der an dem Schaftabschnitt 10 des Unterteils 3 in axialer Richtung formschlüssig angeschlossen ist. Zu diesem Zweck verfügt der Verschlusskörper 25 über eine umlaufende Verriegelungswand 26 an deren zu dem Schaftabschnitt 10 weisenden Innenseite an komplementärer Position zu dem Verriegelungswulst 17 eine Verriegelungsrille 27 eingebracht ist. Die Verriegelungswand 26 erstreckt sich ausgehend von dem scheibenförmigen Grundkörper des Verschlusskörpers 25 in axialer Richtung in Richtung zu dem Kopfabschnitt 9 des Unterteils 3. Die in radiale Richtung nach außen weisende Außenseite 28 der Verriegelungswand 26 begrenzt innenseitig eine Lagerfläche 29. Auf dieser ist ein Nadellager 30 positioniert. Das Nadellager 30 ist nur schematisiert dargestellt und verfügt in einer tatsächlichen Ausgestaltung mehr als nur die vier dargestellten Wälzkörper 31. Die Wälzkörper 31 sind in einem Käfig 32 gehalten. Das Nadellager 30 ist insgesamt problemlos handhabbar und montierbar. Die Unterseite des Oberteils 2 verfügt über eine zu dem Verschlusskörper 25 weisende Lagerfläche, die sodann die zu der Lagerfläche 29 komplementäre Lagerfläche darstellt. Hierzu wird auf Figur 3 verwiesen, in der diese unterseitige Lagerfläche des Oberteils mit dem Bezugszeichen 33 kenntlich gemacht ist.

Ein Verschlussring 34 dient zum Verschließen eines Ringspaltes zwischen der Außenseite 15 des Kopfabschnittes 9 des Unterteils 3 und dem zylindrischen Wandabschnitt 7 des Oberteils 2. Zum Zwecke seiner Montage sind an die Unterseite des Verschlussringes 34 paarweise miteinander angeordnete Raststege 35 angeformt, deren Rastköpfe voneinander wegweisen. Die Raststege 35 eines Raststegpaares durchgreifen in axialer Richtung jeweils eine Drehmitnahmeausnehmung 16, wobei deren Rastköpfe eine solche Drehmitnahmeausnehmung 16 zum Rastfixieren des Verschlussringes 34 an dem Kopfabschnitt 9 des Unterteils 3 unterseitig hintergreifen. Hierdurch ist der Verschlussring 34 drehmomentschlüssig mit dem Unterteil 3 verbunden. Der Verschlussring 34 trägt an seiner Oberseite Kennzeichnungspfeile, durch die einem Benutzer die Lage der Drehmitnahmeausnehmungen 16 angezeigt wird.

Die Drehmitnahmeausnehmungen 16 des Unterteils 3 dienen dem Zweck, damit der Anschlagpunkt 1 mittels seines Oberteils 2 werkzeuglos handfest an einen handzuhabenden Gegenstand angeschlossen werden kann. Um eine solche Drehmitnahme zum Anschließen des Anschlagpunktes 1 an einen handzuhabenden Gegenstand oder zum Lösen desselben von diesem zu erzielen, ist das Oberteil 2 im Bereich seines ringförmigen Grundkörpers 5 mit zwei unabhängig voneinander betätigbaren Kupplungsmitteln 36 ausgerüstet. Jedes Kupplungsmittel 36 umfasst einen Kupplungsbolzen 37, eine Druckfeder 38 als Rückstellelement und eine Betätigungskappe 39, deren Stirnfläche bei einer Betätigung eines Kupplungsmittels 36 zum Ineingriffstellen der Spitze des Kupplungsbolzen 37 in eine Drehmitnahmeausnehmung 16 gegen die Kraft der Druckfeder 38 wirkt. Eine Rückstellung eines betätigten Kupplungsmittels 36 erfolgt somit durch die Druckfeder 38. Geführt sind die Kupplungsbolzen 37 jeweils in einer radial ausgerichteten Führungsbohrung 40 des Oberteils 2. Die Betätigungskappe 39 befindet sich in einer Griffmulde 41, die bei dem dargestellten Ausführungsbeispiel als trichterförmige Vergrößerung der eigentlichen Führungsbohrungen 40 ausgeführt ist. Eine solche Griffmulde 41 ist zweckmäßig, damit kein Betätigungselement über die äußere Mantelfläche des Grundkörpers 5 des Unterteils 3 vorsteht.

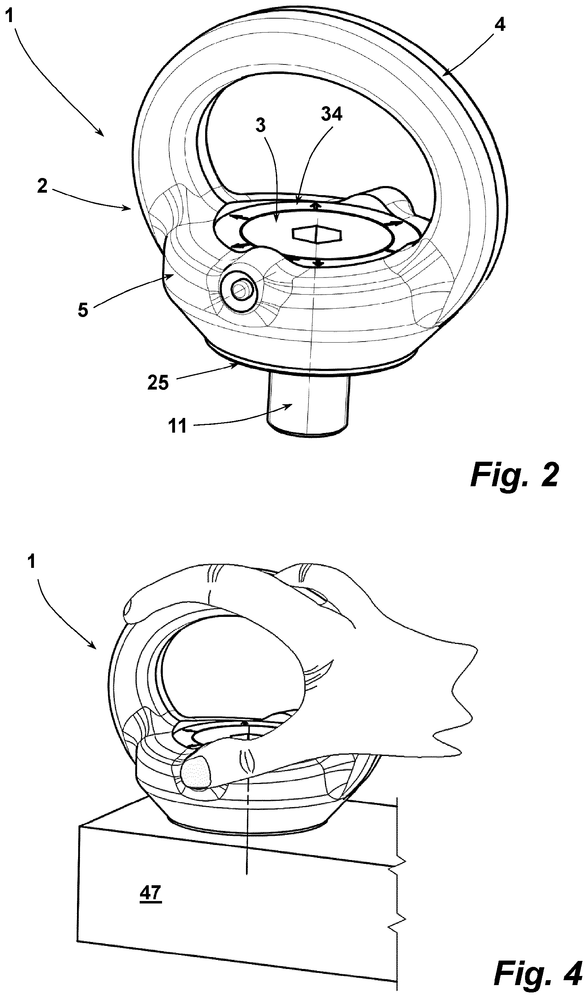

Der Anschlagpunkt 1 ist in Figur 2 in seinem Zusammenbau gezeigt und verdeutlicht seine kompakte Ausführung.

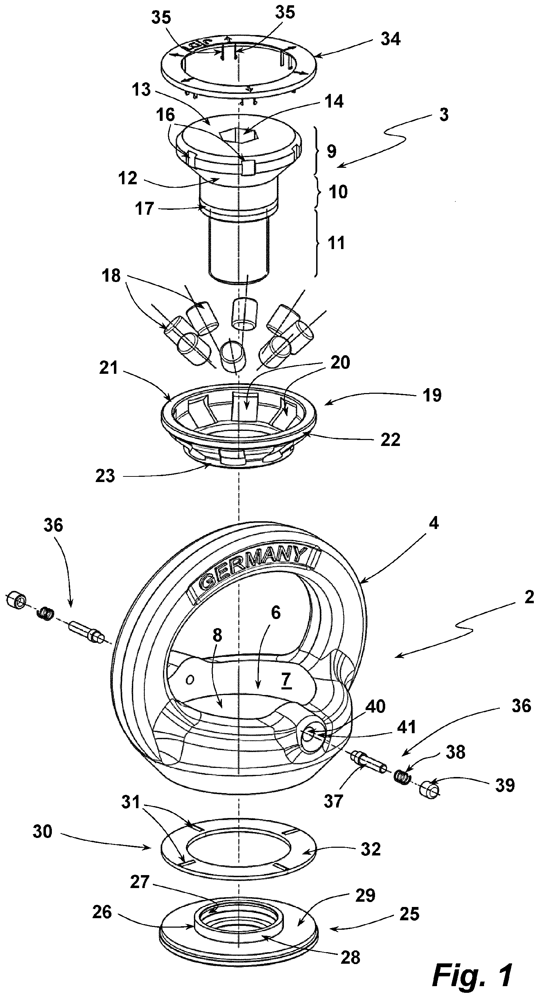

Die Lagerung des gegenüber dem Unterteil 3 drehbaren Oberteils 2 ist in der Schnittdarstellung der Figur 3 als Zusammenbau der zu der Figur 1 beschriebenen Einzelelemente ersichtlich. Details sind in Form von vergrößerten Detaildarstellungen hervorgehoben. Die Detaildarstellung A zeigt die in ihrem Lagerkörperkäfig 19 zwischen den beiden Positionierungsringen 21, 23 angeordneten zylindrischen Wälzlagerkörper 18. Diese stützen sich einerseits an der Lagerfläche 12 als Teil des Kopfabschnittes 9 des Unterteils 3 ab. Die komplementäre Lagerfläche des Oberteils 2 wird durch die Lagerfläche 8 gebildet. Beide Lagerflächen 8, 12 sind mit 45 Grad gegenüber der Drehachse des Oberteils 2 gegenüber dem Unterteil 3 geneigt. Diese Lagerung von Oberteil 2 gegenüber Unterteil 3 erlaubt infolge des Einsatzes nicht kugeliger Wälzkörper, und zwar durch Einsatz von zylindrischen Wälzlagerkörpern 18 in dem dargestellten Ausführungsbeispiel eine besonders hohe Kraftübertragung. Infolge der beschriebenen Neigung der Lagerflächen 8, 12 und der parallel zu diesen ausgerichteten Längsachse der Wälzlagerkörper 18 ist eine Drehbeweglichkeit des Oberteils 2 gegenüber dem Unterteil 3 sowohl bei einer Zugbeanspruchung in axialer als auch in radialer Richtung gleichsam gegeben. Sollte dieses Lager Spiel aufweisen oder im Zuge eines Verschleißes Spiel erhalten, ist dieses für die bestimmungsgemäße Verwendung des Anschlagpunktes 1 ohne Bedeutung. Schließlich sind die Wälzlagerkörper 18 in dem Wälzkörperkäfig 19 gehalten und geführt, sodass ihre Ausrichtung erhalten bleibt, auch wenn Lagerspiel vorhanden ist.

Das zwischen der Lagerfläche 29 des Verschlusskörpers 25 und der Lagerfläche 33 des Oberteils 2 eingesetzte Nadellager 30 dient zur drehbeweglichen Abstützung des Oberteils 2 gegenüber dem Verschlusskörper 25 als Teil des Unterteils 3 vor allem bei auf das Anschlussorgan des Oberteils 2 wirkenden Querlastbeanspruchungen. Ein Verkippen des Oberteils 2 gegenüber dem Unterteil 3, was bei einer Querlastbeanspruchung des Anschlussorgans des Anschlagpunktes 1, wenn Spiel in dem Lager ist, möglich ist, wird auf diese Weise wirksam abgefangen und somit eine dauerhafte Drehbeweglichkeit des Oberteils 2 gegenüber dem Unterteil 3 auch bei derartigen Belastungen gewährleistet. Der Grundkörper 15 des Unterteils 3 trägt einen nach unten abragenden Ringfortsatz 42. Dieser ist in der Detailvergrößerung B verdeutlicht. Dieser Ringfortsatz 42 fasst den oberen Abschnitt des scheibenartigen Verschlusskörpers 25 radial außenseitig ein und bildet mit dieser Außenseite unter Belassung eines Bewegungsspaltes eine Labyrinthdichtung 43. Hierdurch ist ein Eindringen von Verunreinigungen in das Nadellager 30 oder auch in das durch die Wälzlagerkörper 18 bereitgestellte Lager verhindert. Zu diesem Zweck wird der untere Abschluss des Ringfortsatzes 42 von einem Abschnitt des Verschlusskörpers 25 untergriffen.

Der in axialer Richtung wirkende Formschluss zwischen dem Verschlusskörper 25 und dem Schaftabschnitt 10 des Unterteils 3 ist in der Detaildarstellung C gezeigt. Der außenseitig an dem Schaftabschnitt 10 angeformte Verriegelungswulst 27 taucht in die Verriegelungsrille 27 der Verriegelungswand 26 ein. Der Schaftabschnitt 10 bildet im Übergang zu seinem Gewindebolzen 11 einen Anschlagabsatz 44 aus. Dieser ist von einem Anschlagfortsatz 45 des Verschlusskörpers 25 untergriffen. Damit ist die Montageposition in axialer Richtung des Verschlusskörpers 25 an dem Schaftabschnitt 10 des Unterteils 3 definiert. Zugleich ist hierdurch der Auslauf des Gewindes des Gewindebolzens 11 in Richtung zu dem Anschlagabsatz 44 gegenüber Querlastbeanspruchung und einer damit einhergehenden Kerbwirkung geschützt. In axialer Richtung ist die Unterseite des Verschlusskörpers 25 von dem Anschlagabsatz 44, an dem das Gewinde des Gewindebolzens 11 ausläuft, beabstandet.

Die Schnittdarstellung der Figur 3 des Anschlagpunktes 1 verdeutlicht, dass die Unterseite des Verschlusskörpers 25 eine Anschlagfläche 46 bildet, mit der der Anschlagpunkt 1 mit der Oberfläche eines handzuhabenden Gegenstandes verspannt wird.

Zum Anschließen des Anschlagpunktes 1 an einen handzuhabenden Gegenstand 47 - in Figur 4 ist dieser schematisiert als Quader dargestellt - wird, wenn nur ein handfestes Verspannen erforderlich ist, durch Betätigen eines der beiden oder auch beider Kupplungsmittel 36, sodass der Endabschnitt zumindest eines Kupplungsbolzens 37 in eine Drehmitnahmeausnehmung 16 des Unterteils 3 eingreift, wodurch das Oberteil 2 drehmomentschlüssig mit dem Unterteil 3 gekoppelt ist, und anschließendem Drehen des Oberteils 2 herbeigeführt. Der Vorgang des handfesten Anschließens des Anschlagpunktes 1 an den handzuhabenden Gegenstand 47 ist in Figur 4 veranschaulicht. Die leichte und ergonomisch vorteilhafte Bedienbarkeit des Anschlagpunktes wird aus dieser Darstellung deutlich. Ist der Anschlagpunkt 1 an den handzuhabenden Gegenstand 47 angeschlossen, springt der Kupplungsbolzen 37 beim Loslassen der Betätigungskappe 39 infolge der in der als Schraubendruckfeder 38 ausgeführten Rückstellfeder gespeicherten Energie in seine Ausgangsstellung zurück, sodass dann das Oberteil 2 wieder frei gegenüber dem Unterteil 3 drehbar ist. Ist ein Verspannen mit höheren Kräften gewünscht, kann die in die obere Stirnseite 13 des Kopfabschnittes 9 eingebrachte Drehmitnahmekontur 14 genutzt und das Unterteil 3 mittels eines Werkzeuges mit dem handzuhabenden Gegenstand 47 verspannt werden.

In der Detaildarstellung D ist ein Kupplungsmittel 36 gezeigt. Neben den vorbeschriebenen Elementen trägt der Kupplungsbolzen 37 einen zu dem zylindrischen Wandabschnitt 7 der Unterteilaufnahme 6 wirkenden Anschlag. Bereitgestellt ist dieser durch einen umlaufenden Vorsprung 48. Der in radialer Richtung innenseitig daran angeformte Abschnitt des Kupplungsbolzens 37 bildet mit seiner Spitze den Kupplungsabschnitt 49, der bei betätigtem Kupplungsmittel 36 durch Eindrücken des Kupplungsbolzens 37 in eine Drehmitnahmeausnehmung 16 des Kopfabschnittes 9 des Unterteils 3 eingreift. Die Führungsbohrung 40 verfügt über einen innenliegenden Abschnitt 50 und einen außenliegenden Abschnitt 51. Der Durchmesser des innenliegenden Abschnittes 50 ist geringer als derjenige des außenliegenden Abschnittes 51. Ein Absatz bildet den Übergang zwischen den beiden Abschnitten 50, 51.

Die Erfindung ist anhand von Ausführungsbeispielen beschrieben worden. Ohne den Umfang der geltenden Ansprüche zu verlassen, ergeben sich für einen Fachmann zahlreiche weitere Ausgestaltungsmöglichkeiten, ohne dass diese im Rahmen dieser Ausführungen im Einzelnen dargelegt werden müssten.

### Bezugszeichenliste

| | | | |
|---|---|---|---|
| 1 | Anschlagpunkt | 31 | Wälzkörper |
| 2 | Oberteil / Außenlagerteil | 32 | Käfig |
| 3 | Unterteil / Innenlagerteil | 33 | Lagerfläche |
| 4 | Ösenbogen | 34 | Verschlussring |
| 5 | Grundkörper | 35 | Raststeg |
| 6 | Unterteilaufnahme | 36 | Kupplungsmittel |
| 7 | Wandabschnitt | 37 | Kupplungsbolzen |
| 8 | Lagerfläche | 38 | Druckfeder |
| 9 | Kopfabschnitt | 39 | Betätigungskappe |
| 10 | Schaftabschnitt | 40 | Führungsbohrung |
| 11 | Gewindebolzen | 41 | Griffmulde |
| 12 | Lagerfläche | 42 | Ringfortsatz |
| 13 | Stirnseite | 43 | Labyrinthdichtung |
| 14 | Drehmitnahmekontur | 44 | Anschlagabsatz |
| 15 | Außenseite | 45 | Anschlagfortsatz |
| 16 | Drehmitnahmeausnehmung | 46 | Anschlagfläche |
| 17 | Verriegelungswulst | 47 | handzuhabender Gegenstand |
| 18 | Wälzlagerkörper | 48 | Vorsprung |
| 19 | Lagerkörperkäfig | 49 | Kupplungsabschnitt |
| 20 | Wälzkörperaufnahme | 50 | innenliegender Abschnitt |
| 21 | Positionierungsring | 51 | außenliegender Abschnitt |
| 22 | Außenseite | | |
| 23 | Positionierungsring | | |
| 24 | Vorsprung | | |
| 25 | Verschlusskörper | | |
| 26 | Verriegelungswand | | |
| 27 | Verriegelungsrille | | |
| 28 | Außenseite | | |
| 29 | Lagerfläche | | |
| 30 | Nadellager | | |

## Patentansprüche

1. Anschlagpunkt mit einem einen Gewindebolzen als Anschlussmittel zum Anschließen des Anschlagpunktes (1) an einen damit handzuhabenden Gegenstand (47) aufweisenden Unterteil (3) und mit einem gegenüber dem Unterteil (3) drehbaren und daran angeschlossenen Oberteil (2) mit einem Anschlussorgan zum Anschließen eines Hebe-, Anschlag- oder Zurrmittels, wobei zur Lagerung des Oberteils (2) gegenüber dem Unterteil (3) eines der beiden Teile (2) als Außenlagerteil zumindest einen axialen Abschnitt des anderen Teils (3) als Innenlagerteil einfasst, welcher Anschlagpunkt (1) mit Kupplungsmitteln (36) zum drehmomentschlüssigen Koppeln des Oberteils (2) mit dem Unterteil (3) zum Zwecke eines werkzeuglosen Anschließen des Anschlagpunktes (1) an einen damit handzuhabenden Gegenstand (47) ausgestattet ist, wobei als Kupplungsmittel (36) ein in radialer Richtung verstellbarer, in dem Außenlagerteil (2) gehaltener Kupplungsbolzen (37) und auf Seiten des Innenlagerteils (3) zumindest eine in radialer Richtung zugängliche, in Umfangsrichtung wirkende Drehmitnahmekontur (16) vorgesehen sind, mit welcher Drehmitnahmekontur (16) der betätigte Kupplungsbolzen (37) mit einem Kupplungsabschnitt (49) zum Herbeiführen der drehmomentschlüssigen Kopplung von Oberteil (2) und Unterteil (3) in Eingriff gestellt wird, **dadurch gekennzeichnet, dass** auf den Kupplungsbolzen (37) zumindest ein Rückstellelement (38) dergestalt wirkt, dass zum Herbeiführen einer drehmomentschlüssigen Kopplung von Oberteil (2) und Unterteil (3) der Kupplungsbolzen (37) gegen die Kraft des zumindest einen Rückstellelementes (38) bewegbar ist und bei nicht betätigtem Kupplungsbolzen (37) das Oberteil (2) gegenüber dem Unterteil (3) frei drehbar ist.

2. Anschlagpunkt nach Anspruch 1, **dadurch gekennzeichnet, dass** der Kupplungsbolzen (37) in einer eine radiale Erstreckung aufweisenden Führungsbohrung (40) des Außenlagerteils (2) geführt ist.

3. Anschlagpunkt nach Anspruch 1 oder 2, **dadurch gekennzeichnet, dass** der Kupplungsbolzen (37) eine von seinem Kupplungsabschnitt (49) wegweisende Anschlagfläche aufweist, durch die in Zusammenwirkung mit einem Gegenanschlag des Außenlagerteils (2) seine Nichtbenutzungsstellung definiert ist, an welchem Gegenanschlag der Kupplungsbolzen (37) mit seiner Anschlagfläche bei Nichtbetätigung unter Vorspannung anliegt.

4. Anschlagpunkt nach Anspruch 3, **dadurch gekennzeichnet, dass** der Gegenanschlag durch eine zum Innenlagerteil weisende Wand (7) des Außenlagerteils (2) bereitgestellt ist.

5. Anschlagpunkt nach Anspruch 3 oder 4, **dadurch gekennzeichnet, dass** die Anschlagfläche des Kupplungsbolzens (37) durch eine gestuft ausgeführte Durchmesserreduzierung des Kupplungsbolzens (37) bereitgestellt ist.

6. Anschlagpunkt nach einem der Ansprüche 2 bis 5, **dadurch gekennzeichnet, dass** die Führungsbohrung (40) gestuft ausgeführt ist und einen zur Führung des Kupplungsbolzens (37) radial innenliegenden Abschnitt (50) mit geringerem Durchmesser und unter Ausbildung eines Absatzes einen daran anschließenden, radial außenliegenden Abschnitt (51) mit größerem Durchmesser umfasst, wobei in dem in dem außen liegenden Abschnitt befindlichen Ringspalt zwischen der Mantelfläche des Kupplungsbolzens (37) und der Innenwand der Führungsbohrung (40) das zumindest eine Rückstellelement (38) angeordnet ist.

7. Anschlagpunkt nach Anspruch 6, **dadurch gekennzeichnet, dass** das dem Kupplungsabschnitt (49) gegenüberliegende Ende des Kupplungsbolzens (37) mit einer Betätigungshandhabe (39) ausgerüstet ist.

8. Anschlagpunkt nach Anspruch 7, **dadurch gekennzeichnet, dass** die Betätigungshandhabe eine auf das diesseitige Ende des Kupplungsbolzens (37) aufgesteckt und in axialer Richtung kraftschlüssig mit diesem verbundene Betätigungskappe (39) ist.

9. Anschlagpunkt nach Anspruch 8, **dadurch gekennzeichnet, dass** die Betätigungskappe (39) mit einem Endabschnitt in den radial außenliegenden Abschnitt der Führungsbohrung (40) eingreift und das zumindest eine Rückstellelement (38) einerseits an dem Absatz der Führungsbohrung (40) und andererseits an der endseitigen Stirnfläche der Betätigungskappe (39) abgestützt ist.

10. Anschlagpunkt nach einem der Ansprüche 1 bis 9, **dadurch gekennzeichnet, dass** als Rückstellelement eine Schraubendruckfeder (38) vorgesehen ist.

11. Anschlagpunkt nach einem der Ansprüche 1 bis 10, **dadurch gekennzeichnet, dass** die zumindest eine Drehmitnahmekontur (16) des Innenlagerteils (3) als in axialer Richtung verlaufende, endseitig offene Nut ausgeführt ist.

12. Anschlagpunkt nach einem der Ansprüche 1 bis 11, **dadurch gekennzeichnet, dass** das Oberteil (2) des Anschlagpunktes das Außenlagerteil und das Unterteil (3) das Innenteil sind.

13. Anschlagpunkt nach Anspruch 12, **dadurch gekennzeichnet, dass** das Unterteil (3) einen Kopfabschnitt (9) und einen daran angeformten, gegenüber dem Kopfabschnitt (9) mit einem geringeren Durchmesser ausgelegten Schaftabschnitt (10) aufweist und dass in die radial nach außen weisende Mantelfläche des Kopfabschnittes (9) die zumindest eine Drehmitnahmekontur als Drehmitnahmeausnehmung (16) eingebracht ist.

14. Anschlagpunkt nach einem der Ansprüche 1 bis 13, **dadurch gekennzeichnet, dass** dem Innenlagerteil (3) eine Markierung zum Kennzeichnen der Position der zumindest einen Drehmitnahmekontur zugeordnet ist.

15. Anschlagpunkt nach Anspruch 14, **dadurch gekennzeichnet, dass** drehmomentschlüssig an das Innenlagerteil (3) ein an seiner Oberseite die zumindest eine Markierung tragender Verschlussring (34) angeschlossen ist.

16. Anschlagpunkt nach Anspruch 15, **dadurch gekennzeichnet, dass** an den Verschlussring (34) paarweise Raststege (35) mit endseitigen, voneinander wegweisenden Rastköpfen angeformt sind, die bei an das Innenlagerteil (3) angeschlossenem Verschlussring (34) jeweils eine als endseitig offene Nut ausgeführte Drehmitnahmeausnehmung (16) hintergreifen.

## Claims

1. An anchor point with a lower part (3) having a threaded pin as connecting means for connecting the anchor point (1) to an object (47) to be handled therewith and with an upper part (2), which is rotatable relative to the lower part (3) and is connected thereto, having a connecting member for connecting a lifting, anchoring or lashing means, wherein, for mounting the upper part (2) relative to the lower part (3), one of the two parts (2), as an outer bearing part, encloses at least one axial portion of the other part (3) as an inner bearing part, which anchor point (1) is provided with coupling means (36) for the torque-locking coupling of the upper part (2) to the lower part (3) for the purpose of a tool-free connection of the anchor point (1) to an object (47) to be handled therewith, wherein the coupling means (36) are provided as a coupling pin (37) which is adjustable in the radial direction and is held in the outer bearing part (2), and as at least one rotary driving contour (16) which is accessible in the radial direction and acts in the circumferential direction on the sides of the inner bearing part (3), with which rotary driving contour (16) the actuated coupling pin (37) is engaged with a coupling portion (49) for bringing about the torque-locking coupling of the upper part (2) and the lower part (3), **characterized in that** at least one restoring element (38) acts on the coupling pin (37) in such a way that, for bringing about a torque-locking coupling of the upper part (2) and the lower part (3) the coupling pin (37) is movable against the force of the at least one restoring element (38) and when the coupling pin (37) is not actuated, the upper part (2) is freely rotatable relative to the lower part (3).

2. The anchor point according to claim 1, **characterized in that** the coupling pin (37) is guided in a guide bore (40) of the outer bearing part (2) having a radial extent.

3. The anchor point according to claim 1 or 2, **characterized in that** the coupling pin (37) has an anchor surface which points away from its coupling portion (49) and by means of which, in cooperation with a counter-anchor of the outer bearing part (2), its non-use position is defined, against which counter-anchor the coupling pin (37) bears with its anchor surface under preload when not actuated.

4. The anchor point according to claim 3, **characterized in that** the counter-anchor is provided by a wall (7) of the outer bearing part (2) facing the inner bearing part.

5. The anchor point according to claim 3 or 4, **characterized in that** the anchor surface of the coupling pin (37) is provided by a stepped reduction in the diameter of the coupling pin (37).

6. The anchor point according to any one of claims 2 to 5, **characterized in that** the guide bore (40) is of stepped design and comprises a portion (50) of smaller diameter, which lies radially on the inside for guiding the coupling pin (37), and which comprises, by forming a shoulder, a portion (51) of larger diameter, which adjoins it and lies radially on the outside, wherein the at least one restoring element (38) is arranged in the annular gap, which is located in the outer portion, between the lateral surface of the coupling pin (37) and the inner wall of the guide bore (40).

7. The anchor point according to claim 6, **characterized in that** the end of the coupling pin (37) opposite the coupling portion (49) is provided with an actuating handle (39).

8. The anchor point according to claim 7, **characterized in that** the actuating handle is an actuating cap (39) which is fitted onto the proximal end of the coupling pin (37) and is connected to the latter in an axial direction in a force-locking manner.

9. The anchor point according to claim 8, **characterized in that** the actuating cap (39) engages with an end portion in the radially outer portion of the guide bore (40), and the at least one restoring element (38) is supported on the one hand on the shoulder of the guide bore (40) and on the other hand on the end-side end face of the actuating cap (39).

10. The anchor point according to any one of claims 1 to 9, **characterized in that** a helical compression spring (38) is provided as the restoring element.

11. The anchor point according to any one of claims 1 to 10, **characterized in that** the at least one rotary driving contour (16) of the inner bearing part (3) is designed as a groove which runs in the axial direction and is open at the end.

12. The anchor point according to any one of claims 1 to 11, **characterized in that** the upper part (2) of the anchor point is the outer bearing part and the lower part (3) is the inner part.

13. The anchor point according to claim 12, **characterized in that** the lower part (3) has a head portion (9) and a shank portion (10) which is formed thereon and is designed with a smaller diameter than the head portion (9), and **in that** the at least one rotary driving contour is introduced as a rotary driving recess (16) into the radially outwardly pointing lateral surface of the head portion (9).

14. The anchor point according to any one of claims 1 to 13, **characterized in that** a marking for identifying the position of the at least one rotary driving contour is assigned to the inner bearing part (3).

15. The anchor point according to claim 14, **characterized in that** a locking ring (34) carrying the at least one marking is connected to the inner bearing part (3) in a torque-locking manner on its upper side.

16. The anchor point according to claim 15, **characterized in that** latching webs (35) with latching heads pointing away from one another at the ends are formed in pairs on the locking ring (34) and which latching heads, when the locking ring (34) is connected to the inner bearing part (3), each engage behind a rotary driving recess (16) designed as a groove open at the ends.

## Revendications

1. Point de butée avec une partie inférieure (3) présentant un boulon fileté comme moyen de raccordement pour le raccordement du point de butée (1) à un objet (47) manipulé avec celui-ci et avec une partie supérieure (2) pouvant tourner par rapport à la partie inférieure (3) et raccordée à celle-ci, avec un organe de raccordement pour le raccordement d'un moyen de levage, de butée ou d'arrimage. Pour le montage de la partie supérieure (2) par rapport à la partie inférieure (3) de l'une des deux parties (2) comme la pièce de support extérieure, au moins une partie axiale de l'autre partie (3) comme la pièce de support intérieure, lequel point de butée (1) entoure des moyens d'accouplement (36) pour le couplage par liaison de couple de la partie supérieure (2) à la partie inférieure (3), en vue d'un raccordement sans outil du point de butée (1) à un objet (47) manipulé avec celui-ci, un boulon d'accouplement (37) réglable dans la direction radiale et maintenu dans la pièce de support extérieure (2) et, du côté de la pièce de support intérieure (3), au moins un contour d'entraînement en rotation (16) accessible dans la direction radiale et agissant dans la direction circonférentielle, avec lequel le boulon d'accouplement (37) actionné par le contour d'entraînement en rotation (16) est mis en prise avec une section d'accouplement (49) pour réaliser l'accouplement par liaison de couple de la partie supérieure (2) et de la partie inférieure (3), **caractérisé en ce qu'**au moins un élément de rappel (38) agit sur le boulon d'accouplement (37) de telle sorte que, pour réaliser un accouplement par liaison de couple de la partie supérieure (2) et de la partie inférieure (3), le boulon d'accouplement (37) peut être déplacé à l'encontre de la force de l'au moins un élément de rappel (38) et lorsque le boulon n'est pas actionné, la partie supérieure (2) peut tourner librement par rapport à la partie inférieure (3).

2. Point de butée selon la revendication 1, **caractérisé en ce que** le boulon d'accouplement (37) est guidé dans un alésage de guidage (40) et de la pièce de support extérieure (2) présentant une extension radiale.

3. Point de butée selon la revendication 1 ou 2, **caractérisé en ce que** le boulon d'accouplement (37) présente une surface de butée orientée à l'opposé de sa section d'accouplement (49), par laquelle, en coopération avec une contre-butée de la pièce de support extérieure (2), sa position de non-utilisation est définie, contre laquelle s'applique le boulon d'accouplement (37) par sa surface de butée en cas de non-actionnement sous précontrainte.

4. Point de butée selon la revendication 3, **caractérisé en ce que** la contre-butée est fournie par une paroi (7) de la pièce de support extérieure (2) tournée vers la pièce de support intérieure.

5. Point de butée selon la revendication 3 ou 4, **caractérisé en ce que** la surface de butée du boulon d'accouplement (37) est fournie par une réduction de diamètre étagée du boulon d'accouplement (37).

6. Point de butée selon l'une quelconque des revendications 2 à 5, **caractérisé en ce que** l'alésage de guidage (40) est étagé et comprend une section (50) de diamètre inférieur, située radialement à l'intérieur et formant un épaulement, pour le guidage du boulon d'accouplement (37), une section (51) de diamètre supérieur, située radialement à l'extérieur, qui lui fait suite, l'au moins un élément de rappel (38) étant disposé dans la fente annulaire se trouvant dans la section située à l'extérieur, entre la surface d'enveloppe du boulon d'accouplement (37) et la paroi intérieure de l'alésage de guidage (40).

7. Point de butée selon la revendication 6, **caractérisé en ce que** l'extrémité du boulon d'accouplement (37) opposée à la partie d'accouplement (49) est équipée d'une manette d'actionnement (39).

8. Point d'ancrage selon la revendication 7, **caractérisé en ce que** la poignée d'actionnement est un capuchon d'actionnement (39) emboîté sur l'extrémité de ce côté du boulon d'accouplement (37) et relié à celui-ci par adhérence dans la direction axiale.

9. Point de butée selon la revendication 8, **caractérisé en ce que** le capuchon d'actionnement (39) s'engage par une section d'extrémité dans la section radialement extérieure de l'alésage de guidage (40) et **en ce que** l'au moins un élément de rappel (38) prend appui d'une part sur l'alignement de l'alésage de guidage (40) et d'autre part sur la face frontale d'extrémité du capuchon d'actionnement (39).

10. Point de butée selon l'une quelconque des revendications 1 à 9, **caractérisé en ce qu'**un ressort de compression hélicoïdal (38) est prévu comme élément de rappel.

11. Point de butée selon l'une quelconque des revendications 1 à 10, **caractérisé en ce que** l'au moins un contour d'entraînement en rotation (16) de la pièce de support intérieure (3) est réalisé sous la forme d'une rainure ouverte à l'extrémité et s'étendant dans la direction axiale.

12. Point de butée selon l'une quelconque des revendications 1 à 11, **caractérisé en ce que** la partie supérieure (2) du point de butée est la pièce de support extérieure et la partie inférieure (3) est la pièce intérieure.

13. Point de butée selon la revendication 12, **caractérisé en ce que** la partie inférieure (3) présente une section de tête (9) et une section de tige (10) formée sur celle-ci et conçue par rapport à la section de tête (9) avec un diamètre inférieur, et **en ce que** dans la surface d'enveloppe de la section de tête (9), orientée radialement vers l'extérieur, est ménagé au moins un contour d'entraînement en rotation en tant qu'évidement d'entraînement en rotation (16).

14. Point de butée selon l'une des revendications 1 à 13, **caractérisé en ce qu'**à la pièce de support intérieure (3) est associé un marquage pour indiquer la position de l'au moins un contour d'entraînement en rotation.

15. Point de butée selon la revendication 14, **caractérisé en ce qu'**une bague de fermeture (34) portant au moins un repère est raccordée à la pièce de support intérieure (3) par liaison de transmission de couple sur sa face supérieure.

16. Point de butée selon la revendication 15, **caractérisé en ce que** des nervures d'encliquetage (35) allant par paires sont formées sur la bague de fermeture (34) avec des têtes d'encliquetage situées du côté de l'extrémité et tournées à l'opposé l'une de l'autre, qui, lorsque la bague de fermeture (34) est raccordée à la pièce de support intérieure (3), viennent en prise par derrière respectivement un évidement d'entraînement en rotation (16) réalisé sous la forme d'une rainure ouverte du côté de l'extrémité.
